# EUROPEAN PATENT APPLICATION

(11) **EP 1 745 693 A1**
(43) Date of publication of application: **24.01.2007**
(21) Application number: 06015054.7
(22) Date of filing: 19.07.2006
(51) Int. Cl.: A01G 33/00, E02B 3/00, E02D 3/00

(54) **Sea phanerogam method to reduce the coasts erosion, to reduce the carbonic dioxide emission and to increase the fish population**

(30) Priority: 22.07.2005 IT BO20050488
(71) Applicant: De Carlo, Matteo, 62017 Porto Recanati MC (IT); De Carlo, Marta, 62017 Porto Recanati MC (IT)
(72) Inventor: De Carlo, Matteo, 62017 Porto Recanati MC (IT); De Carlo, Marta, 62017 Porto Recanati MC (IT)
(74) Representative: Paolini, Elena

(57) **Abstract**

The method provides the use of sea phanerogams (1) place into a wood container (2) with an iron net (3) fixed to the bottom of the container (2) with connection means (4). Said container has side surfaces (5) with handles (6) and inside it is present a sediment (7).

## Description

In the field of the safeguard and of the recovery of the coasts different methods are known to reduce the erosion of the same coasts. The erosion, particular important for the sandy coasts, manifests itself in two different ways. In the first case the erosion manifests itself with the withdrawal of the coast line. This kind of erosion jeopardizes the stability of the installations, of the coasts and of all the infrastructures built long the coasts. In the other case, instead, the erosion manifests itself with a rising of the depth of the deeps of the submerged beach, owing to the removal of the sandy off the coast, over the active zone of the beach. The seasonal variations of the coast line are, instead, normal situations whereas makes part of the erosion the withdrawal of the coast line protracted in the time. The search in this field has demonstrated that the regression of the beaches is principally due to anthropic actions, to the urbanization and to the realization of irrigation systems that use the water of the rivers. All these factors determine a transport reduction of the terrigenous materials to the sea breaking the equilibrium between the erosion action of the waves and the bringing of terrigenous materials. The equilibrium between the terrigenous material and the eroded material is so compromised and with an unbalance in favour of the erosion. The more used solution to limit the erosion, being not substantially possible to intervene onto the anthropic activities that limit the terrignenous bringing, is that to limit the erosion action of the waves. Actually the more used solution to limit the erosion of the coasts is the installation of artificial barriers. These barriers, consisting of reinforced concrete modular structures or in stones, are placed onto the sea depth with the aim to limit the erosion hydrokinetics actuated to the wave motion. But these artificial barriers create different problems. Infact, they limit the water circulation and, consequently, they slow the regeneration of the same waters.

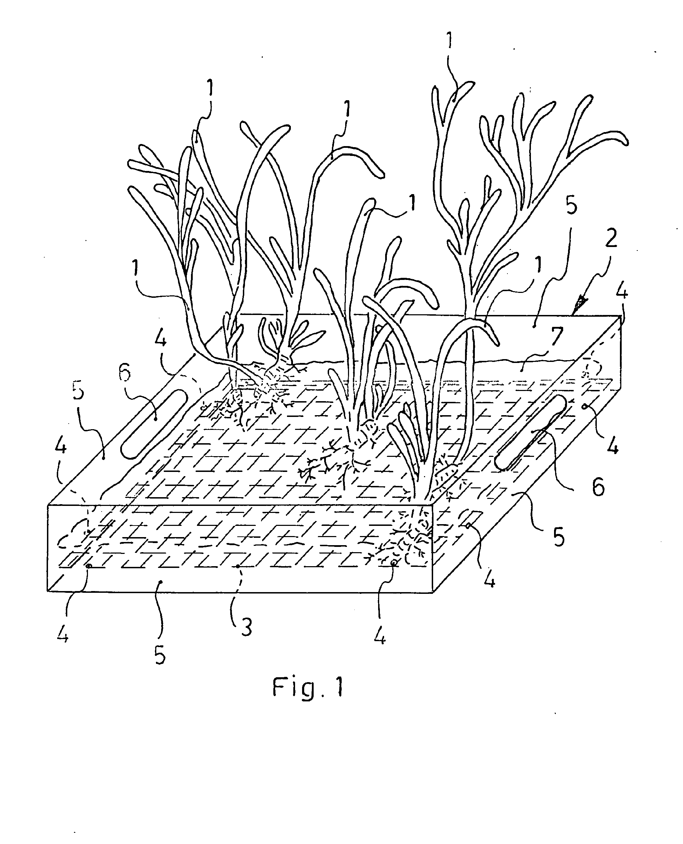

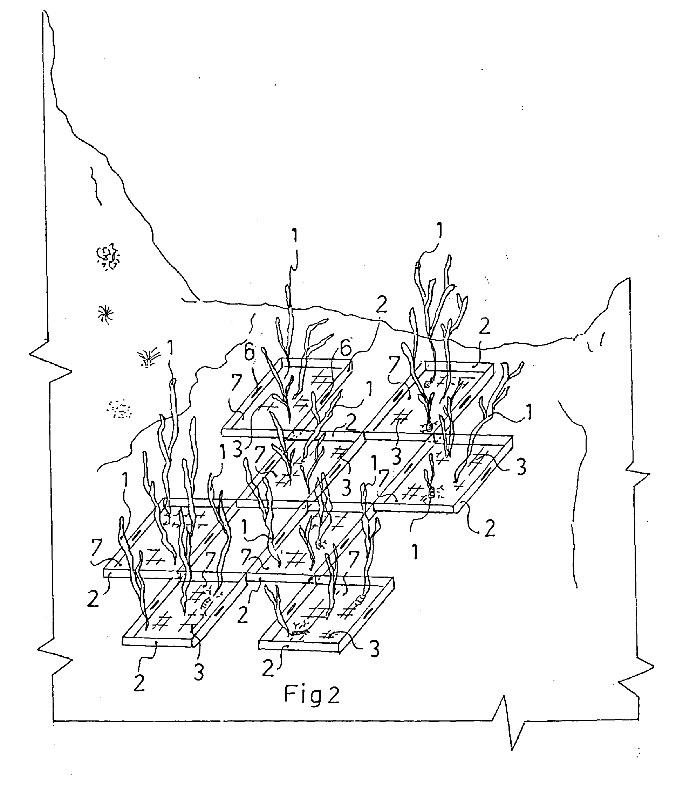

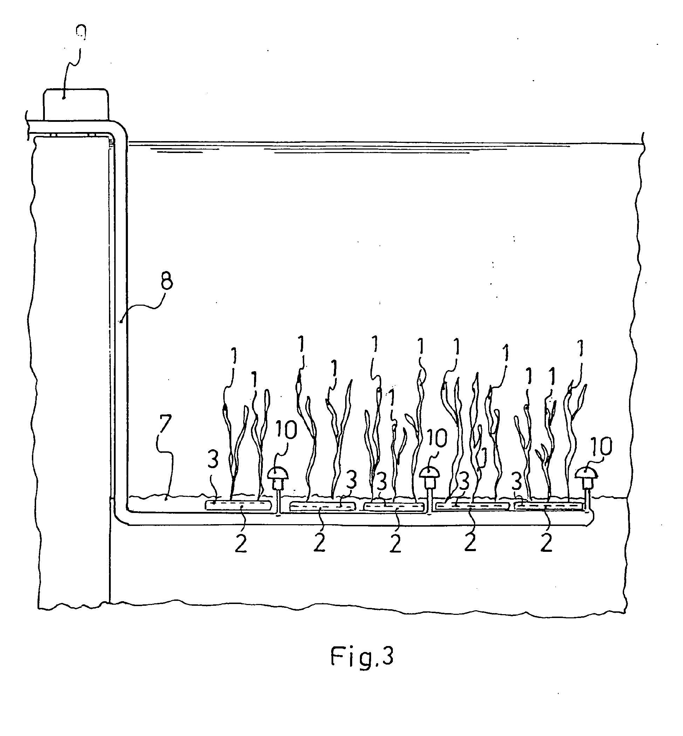

Coming then to form a habitat with limited hydrodynamic circulation, they gather together in the zone between the barriers and the beach a lot of substances that are the nourishment for algas or similar. Infact, there is a substantial growth of the algas in the zones limited to these structures. Moreover, the reinforced concrete or stone barriers give problems for the nautical traffic. Said barriers are to be placed in way to permit the traffic of the craft with different suction lift and they must be indicated onto the charts. To deviate the flow of the waves with the artificial barriers then determines other problems. The artificial barriers, when are not planed in correct manner, are able to deviate the way of the waves, upsetting an erosion equilibrium naturally consolided with consequent regression of part of the beach near to that to be protected. The defacement of the sea depth is an other factor of environmental impact. The reinforced concrete barriers, infact, must live together with the natural beauties of the sea depths. The above cited problems have a solution with the invention in accordance with the environmental necessities, so realizing a method for the solutions of these and other connected problems. Infact, aim of the present invention is to avoid the erosion of the coasts, to favourite the fish population and to reduce the emission of carbonic dioxide in the atmosphere. These aims and characteristics of the present invention after described and claimed are illustrated in a merely and not limiting way in the drawings of sheets 1, 2 and 3. In sheet 1 figure 1 is a perspective view of a base unit of the invention. In sheet 2 figure 2 is view of an application of the invention, with putting of the units of the invention checkered onto a sea depth. In sheet 3 figure 3 is view of an example of application in scheme of the invention to reduce the carbonic dioxide quantity in the atmosphere. The invention consists of sea phanerogams 1 place into a wood container 2 with an iron net 3 fixed to the bottom of the container 2 with connection means 4. The wood container 2 consists of side surfaces 5 and it has handles 6 onto two parallel sides. The iron net 3, i.e. in metallic material, limits the container 2 in its lower part. Inside said container is present a sediment 7 with the aim to support and to nourish the sea phanerogams 1. The supporting and nourishment action is actuated in basic manner to the iron net 3. The sea phanerogams are cultivated inside the container 2 with the net 3 and the sediment 7 in a protected garden centre so to have the safeness to have healthy plants and for not having the necessity to take in continuity plants to the sea depth from the meadows of the giving phanerogams. Cultivated these plants to the requested dimensions into the base unit, i.e in the wood containers of in other biodegradable material having always the iron net to the bottom of sediment, the containers are taken raising the same with the handles 6. The base units can be equipped with mobile planes under the containers and for upper closing of the container, to be only used for the transport and to be taken away in the putting down onto the bottom of the sea, i.e. before the final placing. These mobile parts are only necessary to not disperse the sediment 7 and to avoid to damage the sea phanerogams 1 and they are recovered during the placing in the see. So a plant of base units is formed, placing these containers in the planting zone to be realized, placing these containers on the base of the shape and of the direction of the meadows to be realized. When this is possible it is better a checkered disposition of the containers, such as the plants grow also in the uncultivated square spaces. The placing of the containers with the plants and the net onto the depth sea can be both mechanically, with transport means that actuate the translation onto the depth, than manually with operators that immerse themselves and they bring onto the sea depth the containers 2 with the plants 1 and the metallic net 3. The planting so obtained forms onto the bottom of the sea a sea phanerogams meadow that prevents the erosion of the coasts. The capacity of the meadows of sea phanerogams to prevent the erosion comes to the flexibility of the leaves of these plants and to the whole of the same plants that increase the rugosity of the depth. The sea phanerogams are, infact, higher order plants that live submerged in the water habitat. These vegetables have a cormophyte organization in contraposition to the algas that have no a differentiation in organs and tissues. In the cormophyte the body of the plant is distinct into the roofs, stem or rhizome and leaves, each with a particular function. The rhizome is a lignified and crawling organ that have the work to support the leaves, maintaining the same immerged into the water habitat. The leaves are a physiologic organ more complex in comparison of that of the land plants such as, other to be the normal photosynthesis apparatus, the are also entrusted to the absorption of the nourishment from the around water. The roofs are parts that inserted themselves in particular points said nodes and, such as the bigger part of the absorption of the nourishment is actuated to the leaves, their work is almost only that to anchor the plant to the sea depth. The flexuous leaves apparatus so are an elastic obstacle that reduces the intensity of the waves, without modifying their course. This particularity takes the place of the rigidity of the artificial barriers that, as already said, if are not planed in suitable manner can cause the regression of parts of beach near the beach to be safeguarded To can exploit the flexuosity of the leaves apparatus, it is necessary that the plants were placed in a depth equal to the length of the same leaves. The increase of the rugosity of the depth is instead a property that permits to damp the wave still before that the same is formed. This element is a contrast element to the water parcels when these forms the wave, i.e. when these parcels make the typical circular trajectory. In the invention has basic importance the metallic net 3. Said net, that obviously forms the bottom for the containers of the plants with the aim to hold the sediment 7, is a nourishment for the sea phanerogams but, in particular, it fixes to the sediment substances that would determine the destruction of the plants. The net 3 gives the necessary iron to the plants and it has an important active action onto the sediment 7. The sediment 7 can include sulphureous substances to the gas- state that, in conditions of anoxia of water or ground, are absorbed to the roots and they spread till the leaves where they reach the meristematic tissues and destroy them. The presence of metal into the sediments, instead, brings to complexing the sulphureous substances to iron and sulphur minerals, keep the same in the sediment. The planting created with the invented method and components spreads itself over the wood containers, so forming big meadows. These plants, implementing to the depth with the iron net 3 that preserve the same, form a suitable habitat for other vegetal and animal organisms. These meadows, infact, are considered the coast ecosystems more complete and productive that can be found on global scale and, for this reason, are able to make live together different fish species, permitting their reproduction. The planted sea phanerogams give, other to the cited barrier effect against the waves and contrast to the erosion, a refuge against the predators, a diversity of habitat for the competition between the species, a big found of food, in particular for the small invertebrates and a filter that keeps the nourishment in the water for the fishes that eat plankton. In synthesis the invention is able to substantially favour the fish population. Moreover, these plants, placed in a planting with the described particularities, together with the epiphytes of their leaves (macroalgas or microalgas) are big consumer of dissolved carbonic dioxide. When the carbon dioxide enters in the water means chemical reacts with the sea water to form with the following reaction carbonic acid, i.e. CO₂+H₂O → H₂CO₃. The carbonic acid H₂CO₃ at its time, dissociated itself in bicarbonate ion HCO₃- and carbonate ion CO₃²⁻. The dissolved inorganic carbon (D.I.C.) concentration in sea water is about of three times the concentration of the other dissolved inorganic substances, such as the nitrate or the phosphate and they are necessary to the grow of the plants. In the sea water with ph 8,1 - 8,3, the D.I.C. is composed to bicarbonate ion HCO₃⁻ to the 79-90%, to carbonate ion CO₃²⁻ to the 20-10%, to carbonic dioxide CO₂ to the 1%. So, the demand of inorganic carbonate for the photosynthesis processes that happen in sea, is to be satisfied to the presence of the bicarbonate ions. The invention so permits to reduce the emission of carbonic dioxide in the atmosphere. The elimination of the emission of carbonic dioxide is the atmosphere is a phenomenon strictly connected to the physiology of the sea phanerogams and it use the capacity that these vegetables have to make organic big quantity of bicarbonate ion. The bicarbonate ion is produced to a series of reactions that are baited when the carbonic dioxide is solubilized in sea water. the carbonic dioxide, coming to every source, is sent to the sea through a piping 8 and a normal apparatuses 9, such as pumps and tanks so to make liquid the carbonic dioxide. In this way the carbonic dioxide reaches the sea to the liquid status so to facilitate its solubilization and consequently the reaction to bicarbonate ion. To obtain the transformation of the carbonic dioxide into bicarbonate ion without the same carbonic dioxide returns into the atmosphere, the piping 8 is brought at least to ten metres of depth where is placed a planting of sea phanerogames to make organic the produced ion. For having a better planting are provided different exits 10 of the piping 8 long the meadow of sea phanerogams. To control the good working of the draining plant of the carbonic dioxide are checked the quantity and the quality of the sulphured macroalgas onto the leaves of the sea phanerogams. When these reach standard value equal to values of plantings already present in other parts, there is the certainty that the draining plant of the carbonic dioxide according to the invention correctly works.

## Claims

1. Sea phanerogam method to reduce the coasts erosion, to reduce the carbonic dioxide emission and to increase the fish population **characterized in that** to provide the use of sea phanerogams (1) place into a wood container (2) with an iron net (3) fixed to the bottom of the container (2) with connection means (4), where the container has side surfaces (5) with handles (6) and where inside the container (2) is present a sediment (7).

2. Sea phanerogam method to reduce the coasts erosion, to reduce the carbonic dioxide emission and to increase the fish population, as for the previous claim, **characterized in that** the sea phanerogams are cultivated inside the container (2) with the net (3) and the sediment (7) in a protected garden centre and subsequent the plants (2) are positioned onto the sea depth, forming a planting onto the wanted zone, placing the containers (2) on the base of the shape and of the direction of the meadow to be realized.

3. Sea phanerogam method to reduce the coasts erosion, to reduce the carbonic dioxide emission and to increase the fish population, as for the previous claims, **characterized in that** the planting, realized with the positioning of the containers (2) with the metallic net (3) and with the phanerogams (1) onto the sea depth, is able to limit the erosion of the coasts such as the flexuous leaves are an elastic obstacle that reduces the intensity of the waves, without modifying their course and for effect of the contrast to the circular trajectory of the water parcels forming the wave given to the increasing of the rugosity of the depth where are sea phanerogams (1) inside the container (2).

4. Sea phanerogam method to reduce the coasts erosion, to reduce the carbonic dioxide emission and to increase the fish population, as for the previous claims, **characterized in that** the iron net (3) fixes to the sediment (7) gas-state sulphureous substances such as said iron net (3) has the capacity to bring to complexing the sulphureous substances to iron and sulphur minerals, kept the same into the sediment (7) without making to absorb the sulphureous substances to the roofs of the sea phanerogams (1) and without enlarging the sulphureous substances to the leaves and to the meristematic tissues.

5. Sea phanerogam method to reduce the coasts erosion, to reduce the carbonic dioxide emission and to increase the fish population, as for claim 1, **characterized in that** the container (2) can be realized in any biodegradable material.

6. Sea phanerogam method to reduce the coasts erosion, to reduce the carbonic dioxide emission and to increase the fish population, as for claim 1, **characterized in that** the net (3) can be realized in any material having at least a percentage of iron.

7. Sea phanerogam method to reduce the coasts erosion, t reduce the carbonic dioxide emission and to increase the fish population, as for the previous claims, **characterized in that** the created planting, together with the epiphytes of the sea phanerogams (1), is able to dissolve big quantity of carbonic dioxide with normal apparatuses (9) to make it liquid and solubilized in sea water and with piping (8) to transport the carbonic dioxide placed at least to ten metres of depth where is positioned a planting of sea phanerogams (1) inside containers (2) and iron net (3) to make organic the ions produced in the reaction of the carbonic dioxide with the sea water.

8. Sea phanerogam method to reduce the coasts erosion, to reduce the carbonic emission and to increase the fish population, as for the previous claims, **characterized in that** the meadows of sea phanerogams (1) in containers (2) with metallic net (3) create a coast ecosystem able to increase the fish population.
